# FASCICULE DE BREVET EUROPEEN

(11) **EP 1 753 365 B1**
(45) Date de publication et mention de la délivrance du brevet: **17.10.2007**
(21) Numéro de dépôt: 05769622.1
(22) Date de dépôt: 03.05.2005
(51) Int. Cl.: A61C 8/00, A61C 1/08

(54) **GUIDE CHIRURGICAL IMPLANTAIRE SUR MESURE ET FRAISE ASSOCIÉE ET LEUR PROCÉDÉ DE FABRICATION**
MASSGEFERTIGTE IMPLANTIERBARE CHIRURGISCHE FÜHRUNG UND ZUGEHÖRIGES FRÄSWERKZEUG UND HERSTELLUNGSVERFAHREN
CUSTOM-FIT IMPLANTABLE SURGICAL GUIDE AND ASSOCIATED MILLING TOOL, METHOD FOR THE PRODUCTION OF THE SAME

(30) Priorité: 04.05.2004 FR 0404789
(43) Date de publication de la demande: 21.02.2007
(73) Titulaire: OBL (Société Anonyme), 92320 Chatillon (FR)
(72) Inventeur: SERS, Laurent, F-06400 Cannes (FR)
(74) Mandataire: Degret, Jacques
(86) Numéro de dépôt international: PCT/FR2005/001109
(87) Numéro de publication internationale: WO 2005/120385

(56) Documents cités:
- WO-A-02/07633
- DE-A- 4 026 011
- US-A- 5 320 529

## Description

### DOMAINE TECHNIQUE DE L'INVENTION

La présente invention concerne un guide chirurgical implantaire sur mesure, la fraise associée et leur procédé de fabrication.

### ARRIÈRE PLAN TECHNOLOGIQUE DE L'INVENTION

Des considérations esthétiques ou des indications thérapeutiques conduisent souvent à remplacer par des prothèses les dents manquantes de la denture fortement dégradée d'un patient. Les prothèses les plus courantes sont encore les prothèses à appui dentaire ou muqueux, tandis que se développe la pose de prothèses ancrées dans la mandibule ou le maxillaire du patient au moyen d'un ou plusieurs implants vissés dans des trous forés dans le tissu osseux, ou simplement insérés dans des ostéotomies.

Les implants dentaires endo-osseux se divisent en différentes catégories selon leurs formes et leurs modes d'insertion.

Une première catégorie est constituée par les implants axiaux, ou plus généralement par les implants à insertion verticale sur la crête alvéolaire. Le système d'implants axiaux à visser le plus couramment utilisé est le système dit "Branemark" , du nom de son inventeur, qui le divulgua en France dans la demande FR-2.032.287, publiée le 27 novembre 1970.

Une deuxième catégorie est celle des implants à insertion latérale dans les os de la mâchoire. Ces implants présentent de manière générale une tige verticale destinée à supporter la prothèse et une embase perpendiculaire à la tige, constituée d'une plaque ou d'un ou plusieurs disques. Par exemple, un implant de ce type comportant une plaque rectangulaire ajourée est décrit dans la demande brevet français FR-2.302.715, publiée le 1 octobre 1976 aux de noms de B. Clunet-Coste et J. Maneuf.

La demande de brevet français FR-2.561.907 publiée le 4 octobre 1985 au nom de G. Scortecci divulgue un implant à insertion latérale dont l'embase est alternativement constituée d'un disque.

Cette deuxième catégorie d'implants présente de nombreux avantages sur la première, notamment quand le volume osseux disponible pour l'implantation est réduit, ou quand l'ouverture de la cavité buccale est trop faible pour réaliser une implantation axiale. Un avantage prépondérant est la possibilité d'une mise en charge immédiate de l'implant par la prothèse.

Cependant, pour atteindre ce but, l'ostéotomie de forme complémentaire de l'implant doit être réalisée avec une très grande précision afin d'éviter tout jeu qui pourrait conduire par la suite à un phénomène de rejet.

La demande de brevet allemand DE-4.026.011 publiée le 20 février 1992 au nom de G. Lakos décrit un procédé et un dispositif permettant de guider le geste du praticien. Ce dispositif est constitué d'une butée réglable, fixée d'une part sur la turbine et s'appuyant d'autre part sur la crête osseuse. Par ce moyen, la fraise roue est positionnée à la hauteur voulue et sa pénétration latérale dans l'os est limitée.

Dans le cas des implants axiaux, il est connu de faire appel aux techniques modernes d'imagerie médicale couplées à des techniques de robotique pour simuler en trois dimensions sur ordinateur la pose de ce type d'implants avant toute intervention, et de fabriquer un gabarit de forage qui guidera le chirurgien-dentiste pendant l'opération. La mise en oeuvre de ces techniques a considérablement augmenté le taux d'obtention de bons résultats esthétiques, tout en diminuant le risque de complications post-opératoires.

Un procédé et un dispositif de ce type pour déterminer l'emplacement idéal d'un implant axial, et conçus pour la mise en place précise de celui-ci, sont décrits dans le brevet américain US-5.320.529, au nom de D. Pompa, publié le 14 juin 1994. Selon ce procédé, un modèle stéréo lithographique de l'os de la mâchoire est fabriqué à partir de coupes tomographiques, et il permet au praticien de simuler sur ce modèle la pose des prothèses. Un guide chirurgical est réalisé par moulage du modèle de l'os et de modèles radio-opaques des implants en place, munis de leurs porte-implant. Des canons de forage de diamètres intérieurs correspondant à des forets de différentes tailles sont ensuite placés dans les empreintes des porte-implant.

Le gabarit de forage décrit dans la demande internationale WO99/26540 au nom de M. Klein et al., publiée le 3 juin 1999, reprend le principe précédent de l'utilisation de canons de forage de différents diamètres insérés dans des alésages de diamètre unique, à la différence près que ceux-ci sont insérés dans des cylindres eux-mêmes placés dans des alésages forés directement dans le guide scannographique par une perceuse à commande numérique à partir des données scanner.

Le procédé pour fabriquer des modèles de parties du corps humain à partir d'images numériques divulgué par la Société Materialise dans le brevet belge BE-1.008.372 publié le 2 avril 1996, et appliqué notamment à l'implantologie assistée par ordinateur, supprime l'étape de moulage en permettant de fabriquer directement par stéréo lithographie non seulement les modèles de mandibules et de maxillaires, mais aussi les guides chirurgicaux sur mesure correspondant à toute planification implantaire axiale requise.

A partir des données scanner, l'implantologiste prépare une planification implantaire virtuelle au moyen du logiciel conçu pour la mise en oeuvre du procédé ci-dessus et il transmet les résultats à un bureau de service chargé de convertir ses données en des gabarits de forage réels. En cours d'opération, un gabarit est positionné sur la crête alvéolaire; grâce aux formes complexes des mâchoires et des dents, la position du gabarit est unique et stable. Les gabarits contiennent des cylindres en acier inox implantable qui constituent des guides physiques pour les forets durant la chirurgie et permettent de contrôler les axes de forage de façon optimale. Plusieurs gabarits sont fabriqués avec des cylindres de diamètres différents permettant de tenir compte de la séquence de forage spécifique à chaque implant et de bien s'adapter à chaque cas particulier. Quand le site est prêt, les implants sont insérés de manière habituelle au moyen de porte-implant.

Il ressort donc des documents cités ci-dessus que divers systèmes d'implantologie assistée par ordinateur pour la mise en place d'implants axiaux sont connus de l'état de la technique.

Toutefois, aucun de ces systèmes ne permet l'utilisation d'implants à insertion latérale. Il n'existe pas non plus de guide chirurgical adapté à la réalisation des ostéotomies spécifiques à ce type particulier d'implants, ni de procédé de mise en place de ceux-ci utilisant un tel guide.

### DESCRIPTION GÉNÉRALE DE L'INVENTION

La présente invention concerne donc un guide chirurgical implantaire sur mesure et la fraise associée dont les caractéristiques visent à combler une lacune importante de l'art antérieur.

Elle a précisément pour objet un guide chirurgical du type de ceux placés à cheval sur la crête alvéolaire d'un arc de maxillaire ou de mandibule, et comportant au moins un canon de forage apte à guider axialement une fraise.

Le guide chirurgical selon l'invention est remarquable, d'une part, en ce que ce canon est ouvert latéralement et, d'autre part, en ce qu'au moins une partie de la surface intérieure du canon et au moins une partie de la surface extérieure de la fraise coopèrent entre elles et assurent le maintien axial total de la fraise par rapport au canon.

Préférentiellement, le canon comporte une fente transversale s'étendant dans un plan sensiblement médian perpendiculaire à son axe. La tige d'entraînement de la fraise correspondante comporte une collerette, la fente du canon et la collerette de la fraise coopérant entre elles.

Alternativement, selon une variante de l'invention, la tige d'entraînement de la fraise comporte deux collerettes enserrant le canon.

Selon encore une autre variante de réalisation, la surface intérieure du canon comporte une partie rainurée radialement et la tige d'entraînement de la fraise comporte une partie annelée. Cette partie rainurée est complémentaire de la partie annelée de la fraise et coopère avec elle.

Fort avantageusement, le guide chirurgical selon l'invention présente au moins un canon qui s'étend latéralement dans une direction sensiblement perpendiculaire à l'axe longitudinal du guide. Au moins une partie de la tige d'entraînement de la fraise associée fait elle-même office de fraise, et présente préférentiellement des cannelures longitudinales dont les arêtes sont coupantes. La fraise comporte aussi de préférence au moins une roue dentée.

Le guide chirurgical selon l'invention est aussi remarquable, d'une part, en ce qu'il présente au moins un alésage ouvert latéralement comportant un insert et, d'autre part, en ce qu'au moins une partie de la surface intérieure de cet insert et une partie de la surface extérieure du canon coopèrent entre elles et assurent le maintien axial du canon par rapport à cet alésage.

De préférence, la surface intérieure de l'insert comporte une rainure s'étendant dans un plan sensiblement médian perpendiculaire à son axe et la surface extérieure du canon comporte une cannelure médiane complémentaire de cette rainure. Avantageusement, le canon et l'insert sont de la forme générale d'un cavalier dont la section droite est sensiblement en U. Les branches de ce U s'étendent alors latéralement, sensiblement dans un plan parallèle à la crête alvéolaire. L'axe perpendiculaire à cette crête, et passant par le centre de la partie arrondie du U, coïncide dans ce cas avec l'axe de la fraise.

La présente invention concerne également un procédé de fabrication du guide chirurgical implantaire sur mesure et de la fraise associée décrits ci-dessus. De manière connue, le procédé selon l'invention comporte les étapes suivantes :
a) mise en place d'un guide scannographique dans la bouche du patient,
b) acquisition par ordinateur des données scanner de ce guide scannographique, et de la mandibule ou du maxillaire du patient,
c) simulation sur ordinateur de la mandibule ou du maxillaire à partir des données scanner,
d) génération par ordinateur, sous le contrôle du praticien, de paramètres de planification implantaire à partir de cette simulation,
e) pilotage par ordinateur à partir des paramètres de planification d'un dispositif de formation d'un gabarit destiné à épouser la crête alvéolaire et présentant des alésages d'axes et de positions pré-calculés,
f) fixation dans les alésages du gabarit d'inserts de guidage,
g) insertion dans ces inserts de canons de forage agencés de façon à contrôler la direction et la profondeur de pénétration d'une fraise.

Le procédé selon l'invention se distingue de l'état de la technique par le fait que :
- la planification implantaire est adaptée à des implants à insertion latérale par rapport à la crête alvéolaire,
- les alésages du gabarit, les inserts et les canons sont munis d'ouvertures latérales par rapport à cette crête,
- la fraise utilisée est munie de moyens de maintien axial coopérant avec les canons.

On tire bénéfice d'une réalisation du gabarit par un procédé de stéréo lithographie. Les inserts sont de préférence collés dans le gabarit. La fraise est avantageusement réalisée par forgeage d'une seule pièce de métal au cours d'une étape spécifique.

Le guide chirurgical implantaire sur mesure et la fraise associée selon l'invention sont utilisés de préférence dans un procédé de mise en place d'implants dentaires du type de ceux comportant les étapes suivantes :
a) mise en place d'un guide scannographique dans la bouche du patient,
b) acquisition par ordinateur des données scanner de ce guide scannographique, et de la mandibule ou du maxillaire du patient,
c) simulation sur ordinateur de la mandibule ou du maxillaire à partir des données scanner,
d) génération par ordinateur, sous le contrôle du praticien, de paramètres de planification implantaire à partir de cette simulation,
e) pilotage par ordinateur à partir des paramètres de planification d'un dispositif de formation d'un gabarit destiné à épouser la crête alvéolaire et présentant des alésages d'axes et de positions pré-calculés,
f) fixation dans ces alésages d'inserts de guidage,
g) insertion dans ces inserts de canons de forage agencés de façon à contrôler la direction et la profondeur de pénétration d'une fraise,
h) réalisation d'ostéotomies destinées à recevoir les implants dans la mandibule ou le maxillaire du patient au moyen de la fraise guidée par les canons,
i) placement entre les inserts des implants dans les ostéotomies.

Dans le cadre spécifique de l'invention, la planification est adaptée à des implants à insertion latérale par rapport à la crête alvéolaire et la fraise est introduite latéralement par rapport à cette crête dans les canons.

Avantageusement, les implants sont introduits par percussion dans les ostéotomies tout en étant guidés latéralement par rapport à la crête alvéolaire par les inserts du guide selon l'invention.

De préférence, les implants sont du type de ceux comportant au moins un disque agencé axialement sur une tige destinée à porter une prothèse.

Un grand bénéfice est retiré de l'utilisation du guide chirurgical selon invention du fait que les implants sont chargés par les prothèses immédiatement après leur mise en place.

Ces quelques spécifications essentielles rendent évidents pour le praticien les avantages apportés par le guide chirurgical implantaire sur mesure, la fraise associée, leur procédé de fabrication et leur utilisation selon l'invention par rapport à l'état de la technique antérieur.

Les spécifications détaillées de l'invention, et notamment des exemples de sélections avantageuses de caractéristiques dimensionnelles des éléments constitutifs du guide et de la fraise, sont données dans la description qui suit en liaison avec les dessins ci-joints. Il est à noter que ces dessins n'ont d'autre but que d'illustrer le texte de la description et ne constituent en aucune sorte une limitation de la portée de l'invention.

### BRÈVE DESCRIPTION DES DESSINS

La Figure 1 est une vue éclatée d'un guide chirurgical implantaire sur mesure et d'une fraise associée selon l'invention. Le guide est représenté en place sur une crête alvéolaire. Une ostéotomie typique de la mandibule est aussi montrée.

Les Figures 2a, 2b et 2c sont respectivement une vue de face, une vue de dessus et une vue en coupe longitudinale selon A-A d'un canon de forage du guide selon l'invention.

Les Figures 3a, 3b et 3c sont respectivement une vue de face, une vue de dessus et une vue en coupe longitudinale selon B-B d'un insert destiné à recevoir le canon représenté sur les Figures 2a, 2b et 2c.

Les Figures 4a, 4b et 4c représentent respectivement le mode de réalisation préféré d'un canon du guide chirurgical implantaire sur mesure et de la fraise associée selon l'invention, ainsi que deux variantes de réalisation.

### DESCRIPTION DES FORMES PRÉFÉRÉES DE L'INVENTION

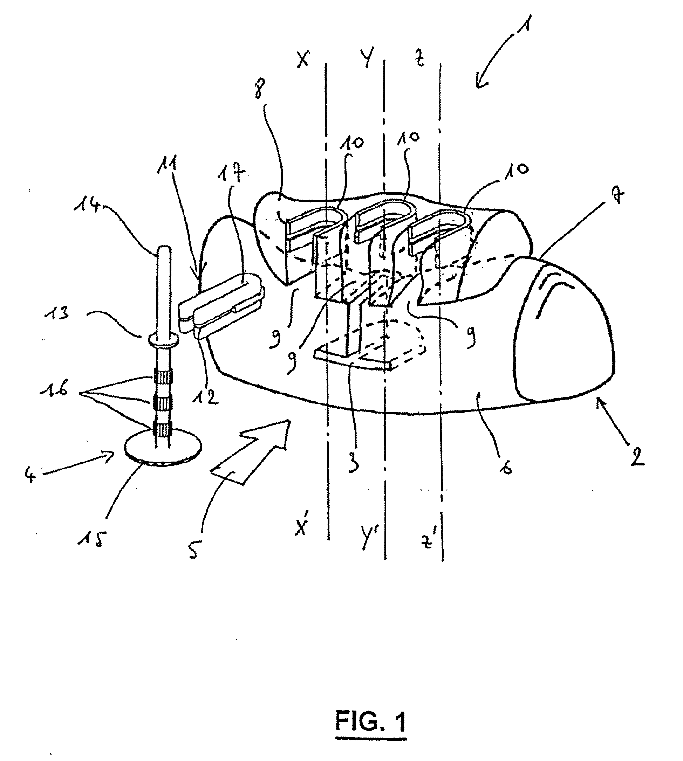

La Figure 1 montre à titre d'exemple un guide 1 chirurgical implantaire sur mesure élaboré pour la pose de trois implants du type "implant disque" dans un arc osseux de mandibule 2. Ce type d'implant endo-osseux, comportant un ou plusieurs disques fixés axialement sur une tige destinée à supporter une prothèse, nécessite la réalisation d'une ou plusieurs ostéotomies 3 en forme de T pour sa mise en place. Une seule de telles ostéotomies 3 adaptée à la mise en place d'un implant à un seul disque est montrée sur la Figure 1.

L'ostéotomie 3 est habituellement effectuée par le praticien au moyen d'une fraise-roue 4 engagée latéralement selon 5 dans la paroi extra buccale 6 de la mandibule 2. L'axe et la profondeur de l'ostéotomie 3 doivent respecter les contraintes de la planification implantaire. Le plan d'ostéotomie 3 doit également être situé avec précision par rapport à la crête alvéolaire 7.

Le guide chirurgical 1 posé à cheval sur la crête alvéolaire 7 et la fraise 4 associée selon l'invention permettent au praticien d'atteindre une très grande précision opératoire.

Le guide 1 est constitué d'un gabarit 8 obtenu par un procédé stéréo lithographique à partir des données scanner du patient et de la simulation implantaire.

Le gabarit 8 comporte trois alésages 9 d'axes XX', YY', ZZ' correspondant aux axes des futurs implants. Ces alésages 9 sont ouverts latéralement, vers l'extérieur de la cavité buccale, et sont munis d'inserts 10, en forme de cavalier, collés à l'intérieur. Les inserts 10 sont en alliage de titane, habituellement en TA6V.

Ces inserts 10 enserrent des canons 11 de forage (un seul est représenté sur la Figure 1), également en forme de U, en acier, tel que l'INOX 316L, destinés à assurer le guidage et le maintien axial de la fraise 4. Pour ce faire, chacun des canons 11 présente une fente transversale 12 coopérant avec une collerette 13 de la tige d'entraînement 14 de la fraise 4.

La tige 14 de la fraise 4 comporte entre la collerette 13 et la roue dentée 15 des zones 16 présentant des cannelures dont les arêtes sont coupantes. La fraise 4 déplacée latéralement selon 5 en direction de la mandibule 2, le déplacement étant alors guidé par la collerette 13 coulissant dans la fente 12 du canon 11 de forage et limité par la surface hémicylindrique 17 du fond du canon 11, permet en conséquence de réaliser l'ostéotomie en T répondant aux paramètres nominaux de la planification implantaire.

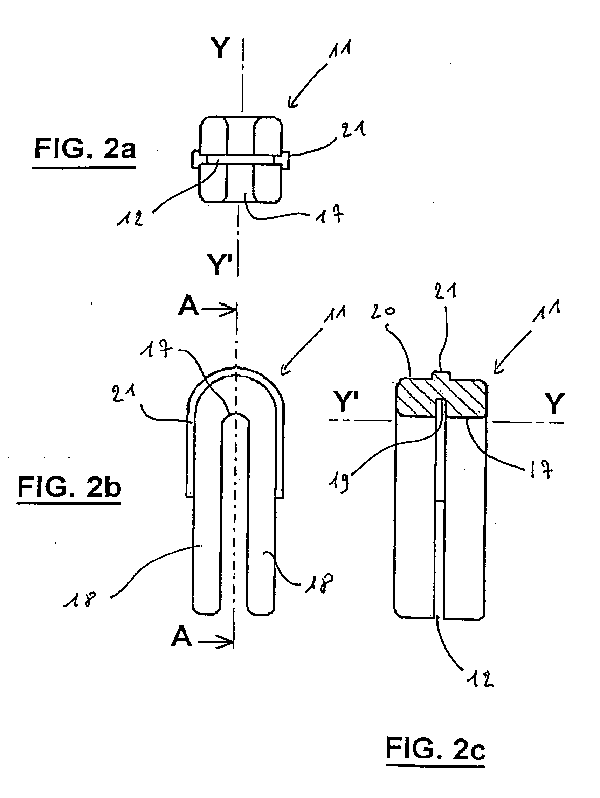

Les Figures 2, 3, et 4 montrent plus précisément les caractéristiques mécaniques d'un insert, d'un canon et d'une fraise dont l'assemblage rend possible ce résultat.

La vue de face du canon 11 de la Figure 2a montre bien la fente transversale 12 dans un plan médian perpendiculaire à l'axe YY'.

La vue de dessus de la Figure 2b montre bien la forme en U du canon 11, dont les deux branches 18 s'étendent latéralement en dehors de l'alésage 9 du gabarit 8, et permettent ainsi de guider la fraise au cours de son approche de la paroi osseuse 6.

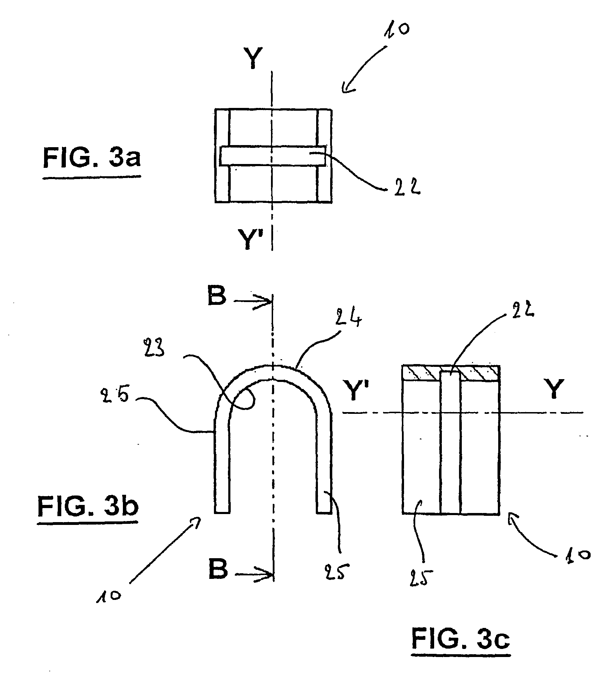

La vue en coupe selon AA de la Figure 2c montre bien la forme du fond du canon 11: sa surface intérieure hémicylindrique 17 présentant une rainure annulaire 19 est complémentaire de la partie en vis-à-vis de la tige 14 et de la collerette 13 de la fraise 4, quand celle-ci est complètement engagée. La surface extérieure hémicylindrique 20 du canon présente une cannelure médiane 21 complémentaire d'une rainure médiane 22 sur la surface interne 23 de la partie courbe de l'insert 10, comme le montrent les Figures 3a, 3b et 3c.

Les dimensions extérieures des inserts sont compatibles avec les logiciels de planification implantaires existants.

Un insert 10 présente préférentiellement une longueur de 8,00 mm et une hauteur de 5,00 mm. Sa surface extérieure hémicylindrique 24 (au niveau de la partie courbe du U) présente un diamètre de 6,00 mm. La surface intérieure hémicylindrique 23 en vis-à-vis a un diamètre de 4,50 mm. Les branches 25 du U ont typiquement une épaisseur de 0,75 mm. La rainure médiane intérieure 22 de section rectangulaire a une profondeur de 0,43 mm et une largeur 1,05 mm.

Les canons 11 ont des dimensions adaptées à celles des inserts 10 et des fraises 4 utilisées. Un canon 11 présente préférentiellement une longueur de 14,25 mm et une hauteur de 5,00 mm. Le diamètre de la surface intérieure hémicylindrique 17 du fond du canon 11 a un diamètre de 1,54 mm. Le diamètre de la surface extérieure hémicylindrique 20 a un diamètre de 4,50 mm correspondant au diamètre extérieur de cette partie de l'insert 10. Les branches 18 du canon 11 ont une épaisseur de 1,48 mm. La cannelure extérieure 21 est de section rectangulaire et mesure 0,43 mm de hauteur et 1,00 mm de largeur. La fente transversale 12 présente préférentiellement une largeur de 0,33 mm.

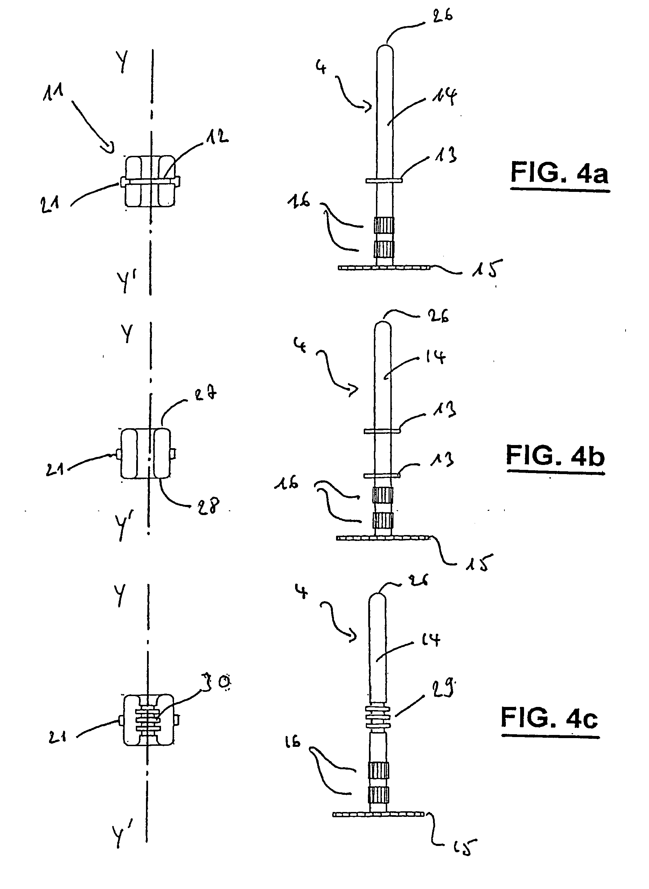

La Figure 4a montre une fraise adaptée au canon 11 précédent. La tige de commande présente donc un diamètre de 1,50 mm, légèrement inférieure au diamètre de la surface intérieure hémicylindrique 17 du fond du canon 11.

La hauteur de 13,75 mm entre sa collerette 13 et l'extrémité 26 de la tige 14 destinée à être insérée dans le porte-outil est standard.

La collerette 13 présente préférentiellement un diamètre de 3,50 mm, correspondant au diamètre de la rainure annulaire 19 du fond du canon 11, et une épaisseur de 0,30 mm, légèrement inférieure à la largeur de la fente 12 du canon 11.

La hauteur de la partie de la tige 14 comprise entre la collerette 13 et l'extrémité supportant la roue dentée 15 dépend des indications. Pour un jeu de fraises adapté aux cas courants, cette hauteur est de l'ordre de 8,75 mm, 14,75 mm ou 20,75 mm.

De même, le diamètre de la roue dentée 15 se décline en différentes valeurs: 3,05 mm, 6,05 mm, 7,05 mm, 8,05 mm, 9,05 mm, 10,05 mm, 12,05 mm, 15,05 mm ou 20,05 mm. L'épaisseur de celle-ci est de préférence 0,30 mm.

Il va de soi que les dimensions de la tige 14 et de la roue dentée 15 ne sont pas critiques. En revanche, les dimensions respectives des parties en contact 17, 19, 13, 14 du canon 11 et de la fraise 4 le sont.

Des variantes de réalisation du couple canon 11 / fraise 4 sont représentées sur les Figures 4b et 4c.

La Figure 4b montre une variante où le guidage et le maintien axial de la fraise 4 par le canon 11 sont obtenus grâce à deux collerettes destinées à enserrer la surface supérieure 27 et la surface inférieure 28 du canon. L'avantage de cette variante est qu'il n'est pas nécessaire de réaliser une fente 12 dans le canon 11. Le désavantage est que deux collerettes 13 sont indispensables. La surface extérieure.20 et la cannelure 21 de ce canon 11 sont identiques à celles du canon, des Figures 2a, 2b, 2c et 4a, ce qui permet d'utiliser le même insert 10.

La Figure 4c montre une autre variante de réalisation où une partie 29 de la tige 14 est annelée. Cette partie annelée 29 coopère avec des rainures 30 circulaires complémentaires agencées dans la surface intérieure 17 du fond du canon 11, quand la fraise 4 est complètement engagée, ou avec des rainures 30 rectilignes agencées dans la surface intérieure de chacune des branches 18 du canon 11 quand la fraise 4 est présentée dans l'ouverture latérale du canon 11. L'avantage de cette variante est un usinage plus simple de la tige 14 de la fraise 4; le désavantage est une plus grande fragilité.

Le gabarit 8 est fabriqué en mettant en oeuvre les procédés connus d'implantologie assistée par ordinateur mis au point pour les implants axiaux, mais adaptés de manière originale à la mise en place d'implants à insertion latérale.

Dans les procédés connus de ce type, au cours d'une étape préliminaire, le praticien ayant à sa disposition un système d'implantologie assistée par ordinateur décide avec le patient de la mise en place d'implants.

Un guide scannographique est placé dans la bouche du patient, puis celui-ci passe son scanner de manière habituelle. Ce guide comporte des marqueurs radio-opaques qui permettront par la suite de faire coïncider le repère de référence des images radiologiques acquises sur ordinateur au cours de cette étape avec les repères des prothèses réelles.

A l'issue de cet examen, les données scanner du guide scannographique et de la mâchoire 2 du patient sont expédiées à un bureau de service, qui convertit les données brutes et les prépare avant de les transmettre à l'implantologiste.

Le logiciel à la disposition du praticien effectue une reconstruction virtuelle de la mandibule 2 ou du maxillaire de son patient à partir des données scanner préparées. Cette simulation sur ordinateur permet de créer une planification implantaire en visualisant les emplacements des futurs implants. Les paramètres de la planification seront retransmis au bureau de service pour la fabrication du gabarit 8 muni des inserts 10.

De façon connue en soi, le bureau de service utilise au cours de cette phase les données reçues pour piloter un dispositif de stéréolithographie qui présente l'avantage, sur la fraiseuse numérique, de pouvoir fabriquer des pièces comportant des cavités fermées.

Le bureau de service colle des inserts 10 à l'intérieur des alésages 9 du gabarit 8 et expédie celui-ci, ainsi qu'un modèle réel de la mâchoire 2, à l'implantologiste. Dans le cas connu des systèmes implantaires pour implants axiaux, ces inserts sont des cylindres dont la dimension est standard, et choisie en fonction du type des implants qui seront posés.

Pendant l'étape suivante, c'est-à-dire pendant l'opération chirurgicale de pose des implants en elle-même, le praticien utilise le gabarit 8 pour réaliser les ostéotomies 3 destinées à recevoir les implants, chacun au point voulu et dans la bonne direction, comme prévu dans la planification. Pour ce faire, dans le cas connu des implants axiaux, il insère des canons 11 de forages cylindriques dans les inserts de guidage 10 du gabarit 8. Ces canons 11 de forage limitent la profondeur de pénétration de la fraise 4 ou du foret.

Les systèmes d'implantologie assistée par ordinateur sont des ensembles complexes de procédés et de matériels optimisés en fonction du but à atteindre. Il s'ensuit que les caractéristiques de chacun des éléments de ces systèmes sont fortement interdépendantes, et conduisent à des standards de faits, résultats de la généralisation de certains « systèmes propriétaires » commercialisés par les plus importants fabricants de matériels médicaux.

Pour être largement accepté, tout nouveau dispositif doit s'appuyer sur ces standards. Le procédé de fabrication du guide 1 chirurgical implantaire sur mesure selon l'invention est donc une adaptation originale des standards propres aux implants axiaux à la mise en place d'implants à insertion latérale. ,

Dans les systèmes dédiés aux implants axiaux, la fonction du guide chirurgical 1 est de contrôler la direction et la profondeur du forage, c'est-à-dire d'exercer un guidage axial et un maintien axial, mais seulement dans une seule direction (profondeur). Le guide chirurgical adapté aux implants à insertion latérale doit contrôler la position en hauteur du plan d'ostéotomie par rapport à la crête alvéolaire, c'est-à-dire bloquer la fraise dans les deux directions axiales.

Les canons de forage selon l'invention sont donc différents des canons habituels: la fraise étant bloquée axialement, elle doit obligatoirement être insérée dans une direction perpendiculaire, et cela implique que les canons soient ouverts latéralement. Par conséquent, les alésages. 9 et les inserts 10 ne sont pas cylindriques, mais également ouverts latéralement; les inserts. 10 sont notamment en forme de cavalier. Cependant les dimensions extérieures de chaque insert sont compatibles avec les dimensions habituelles des cylindres de guidage utilisés dans les gabarits 8 destinés à la mise en place des implants axiaux.

La fraise 4 n'est pas non plus une fraise standard : elle est obligatoirement munie de moyens de maintien axial. Cette fraise 4 spécifique est réalisée par forgeage d'une seule pièce en acier inoxydable de type Z33C13.

Classiquement, le processus de mise en place d'un implant axial s'achève par l'introduction de celui-ci au moyen d'un porte-implant dans l'ostéotomie pratiquée précédemment. Il est connu d'utiliser le cylindre du gabarit pour guider un porte-implant spécial.

Dans le cas des implants à insertion latérale, ceux-ci sont introduits par percussion dans leurs logements osseux. Le gabarit chirurgical 1, grâce à ses inserts 10, est avantageusement utilisé pour guider leur enfoncement. Ces implants sont les implants les plus couramment utilisés pour une insertion latérale, c'est-à-dire ceux comportant une base en forme de disque surmontée par une tige sur laquelle est vissée la prothèse.

La précision des ostéotomies réalisées avec le guide chirurgical selon l'invention permet la pose des "implants disques" sans jeu. Dans ces conditions, il n'est pas nécessaire d'attendre la fixation de l'implant par la matière osseuse, et les prothèses sont immédiatement mises en place. Ceci constitue évidemment un avantage considérable pour le patient.

Comme il va de soi, l'invention ne se limite pas aux seuls modes d'exécution préférentiels décrits ci-dessus. Elle embrasse au contraire toutes les variantes possibles de réalisation qui ne sortiraient pas du cadre de la présente invention tel que défini par les revendications ci-après.

## Revendications

1. Guide (1) chirurgical implantaire sur mesure et fraise (4) associée, du type de ceux placés à cheval sur la crête alvéolaire (7) d'un arc de maxillaire ou de mandibule (2), et comportant au moins un canon (11) de forage apte à guider axialement ladite fraise (4), **caractérisés en ce que** ledit canon (11) est ouvert latéralement et **en ce qu'**au moins une partie de la surface intérieure (17) dudit canon (11) et au moins une partie de la surface extérieure de ladite fraise (4) coopèrent entre elles et assurent le maintien axial total de ladite fraise(4) par rapport audit canon (11) .

2. Guide (1) chirurgical implantaire sur mesure et fraise (4) associée selon la revendication 1, **caractérisés en ce que** le canon (11) comporte une fente (12) transversale s'étendant dans un plan sensiblement médian perpendiculaire à son axe (YY') et **en ce que** la tige (14) d'entraînement de ladite fraise (4) comporte une collerette (13), ladite fente (12) et ladite collerette (13) coopérant entre elles.

3. Guide (1) chirurgical implantaire sur mesure et fraise (4) associée selon la revendication 1, **caractérisés en ce que** la tige (14) d'entraînement de ladite fraise (4) comporte deux collerettes (13) enserrant ledit canon (11).

4. Guide (1) chirurgical implantaire sur mesure et fraise (4) associée selon la revendication 1, **caractérisés en ce que** la surface intérieure (17) du canon (11) comporte une partie rainurée (30) radialement ét **en ce que** la tige (14) d'entraînement de ladite fraise (4) comporte une partie annelée (29), ladite partie rainurée (30) et ladite partie annelée (29) étant complémentaires et coopérant entre elles.

5. Guide (1) chirurgical implantaire sur mesure et fraise (4) associée selon l'une quelconque des revendications 1 à 4, **caractérisés en ce que** le canon (11) s'étend latéralement dans une direction sensiblement perpendiculaire à l'axe longitudinal dudit guide (1).

6. Guide (1) chirurgical implantaire sur mesure et fraise (4) associée selon l'une quelconque des revendications 1 à 5, **caractérisés en ce qu'**au moins une partie de la tige (14) d'entraînement de ladite fraise (4) fait elle-même office de fraise et présente préférentiellement des cannelures (16) longitudinales dont les arêtes sont coupantes.

7. Guide (1) chirurgical implantaire sur mesure et fraise (4) associée selon l'une quelconque des revendications 1 à 6, **caractérisés en ce que** ladite fraise (4) comporte au moins une roue dentée (15).

8. Guide (1) chirurgical implantaire sur mesure et fraise associée selon l'une quelconque des revendications 1 à 7, **caractérisés en ce que** ledit guide (1) présente au moins un alésage (9) ouvert latéralement comportant un insert (10) et **en ce qu'**au moins une partie de la surface intérieure (23) dudit insert (10) et une partie de la surface extérieure (20) dudit canon (11) coopèrent entre elles et assurent le maintien axial dudit canon (11) par rapport audit alésage (9).

9. Guide (1) chirurgical implantaire sur mesure et fraise associée selon la revendication 8, **caractérisés en ce que** la surface intérieure (23) de l'insert (10) comporte une rainure (22) s'étendant dans un plan sensiblement médian perpendiculaire à son axe et **en ce que** la surface extérieure (20) du canon (11) comporte une cannelure (21) médiane complémentaire de ladite rainure (22).

10. Guide (1) chirurgical implantaire sur mesure et fraise (4) associée selon l'une quelconque des revendications 8 ou 9, **caractérisés en ce que** le canon (11) et l'insert (10) sont de la forme générale d'un cavalier dont la section droite est sensiblement en U, les branches (18) du U s'étendant latéralement sensiblement dans un plan parallèle à la crête (7), et l'axe (YY') perpendiculaire à ladite crête (7) passant par le centre de la partie arrondie du U coïncidant avec l'axe de ladite fraise (4).

11. Guide (1) chirurgical implantaire sur mesure et fraise associée selon l'une quelconque des revendications 8 à 10, **caractérisésen ce que** :
- l'insert (10) présente préférentiellement une longueur de 8,00 mm, une hauteur de 5,00 mm, une première surface intérieure (23) hémicylindrique d'un diamètre de 4,50 mm, une première surface extérieure (24) hémicylindrique d'un diamètre de 6,00 mm, des premières branches (25) d'une épaisseur de 0,75 mm, une rainure (22), intérieure de section rectangulaire d'une profondeur de 0,43 mm et de largeur 1,05 mm,
- le canon (11) présente préférentiellement une longueur de 14,25 mm, une hauteur de 5,00 mm, une seconde surface intérieure (17) hémicylindrique d'un diamètre de 1,54 mm, une seconde surface extérieure (20) hémicylindrique d'un diamètre de 4,50 mm, des secondes branches (18) d'une épaisseur de 1,48 mm, une cannelure (21) extérieure de section rectangulaire de 0,43 mm de hauteur et 1,00 mm de largeur,
- la fente (12) transversale présente préférentiellement une largeur de 0,33 mm,
- la tige (14) de commande présente préférentiellement un diamètre de 1,50 mm, et une hauteur de 13,75 mm entre la collerette (13) et l'extrémité (26) destinée à être rendue solidaire du dispositif d'entraînement, et une hauteur de l'ordre de 8,75 mm, 14,75 mm ou 20,75 mm entre ladite collerette (13) et l'extrémité supportant la roue dentée (15),
- la ou lesdites collerettes (13) présentent préférentiellement un diamètre de 3,50mm et une épaisseur de 0,30 mm,
- ladite roue dentée (15) présente préférentiellement un diamètre de 3,05 mm, 6,05 mm, 7,05 mm, 8,05 mm, 9,05 mm, 10,05 mm, 12,05 mm, 15,05 mm ou 20,05 mm, et une épaisseur de 0,30 mm.

12. Procédé de fabrication du guide (1) chirurgical implantaire sur mesure et de la fraise (4) associée selon l'une quelconque des revendications 1 à 11 précédentes, du type de ceux comportant les étapes suivantes:
a) mise en place d'un guide scannographique dans la bouche du patient,
b) acquisition par ordinateur des données scanner dudit guide scannographique, et de la mandibule (2) ou du maxillaire dudit patient,
c) simulation sur ordinateur de ladite mandibule (2) ou dudit maxillaire à partir desdites données,
d) génération par ordinateur, sous le contrôle du praticien, de paramètres de planification implantaire à partir de ladite simulation,
e) pilotage par ordinateur à partir desdits paramètres de planification d'un dispositif de formation d'un gabarit (8) destiné à épouser la crête alvéolaire (7) et présentant des alésages (9) d'axes (XX', YY', ZZ') et de positions pré-calculés,
f) fixation dans lesdits alésages (9) d'inserts (10) de guidage,
g) insertion dans lesdits inserts (10) de canons (11) de forage agencés de façon à contrôler la direction et la profondeur de pénétration d'une fraise (4),
**caractérisé en ce que**
- ladite planification implantaire est adaptée à des implants à insertion latérale par rapport à la crête alvéolaire (7),
- lesdits alésages (9), lesdits inserts (10) et lesdits canons (11) sont munis d'ouvertures latérales par rapport à ladite crête (7),
- ladite fraise (4) est munie de moyens (13, 27, 28) de maintien axial coopérant avec lesdits canons (11).

13. Procédé de fabrication du guide (1) chirurgical implantaire sur mesure et de la fraise (4) associée selon la revendication 12, **caractérisé en ce que** les inserts (10) et les canons (11) sont réalisés respectivement en alliage de titane, préférentiellement TA6V, et en acier, préférentiellement en INOX 316L.

14. Procédé de fabrication du guide (1) chirurgical implantaire sur mesure et de la fraise (4) associée selon l'une quelconque des revendications 12 ou 13, **caractérisé en ce que** le gabarit (8) est réalisé par stéréo lithographie.

15. Procédé de fabrication du guide (1) chirurgical implantaire sur mesure et de la fraise (4) associée selon l'une quelconque des revendications 12 à 14, **caractérisé en ce que** les inserts (10) sont collés dans le gabarit (8).

16. Procédé de fabrication du guide (1) chirurgical implantaire sur mesure et de la fraise (4) associée selon l'une quelconque des revendications 12 à 15, **caractérisé en ce que** ladite fraise (4) est réalisée par forgeage d'une seule pièce de métal au cours d'une étape spécifique.

## Claims

1. Made-to-measure surgical implant guide (1) and associated drill (4), of the type which is placed astride the alveolar ridge (7) of a maxillary or mandibular arch (2), and comprising at least one drilling barrel (11) adapted to guide said drill (4) axially, **characterised in that** the barrel (11) is open at the side and at least part of the inner surface (17) of said barrel (11) and at least part of the outer surface of said drill (4) cooperate with one another and ensure total axial securement of said drill (4) relative to said barrel (11).

2. Made-to-measure surgical implant guide (1) and associated drill (4) according to claim 1, **characterised in that** the barrel (11) has a transverse slot (12) extending in a substantially median plane perpendicular to its axis (YY') and **in that** the drive rod (14) of said drill (4) comprises a flange (13), said slot (12) and said flange (13) cooperating with one another.

3. Made-to-measure surgical implant guide (1) and associated drill (4) according to claim 1, **characterised in that** the drive rod (14) of said drill (4) comprises two flanges (13) gripping said barrel (11) .

4. Made-to-measure surgical implant guide (1) and associated drill (4) according to claim 1, **characterised in that** the inner surface (17) of the barrel (11) comprises a radially grooved part (30) and **in that** the drive rod (14) of said drill (4) comprises an annulated part (29), said grooved part (30) and said annulated part (29) being complementary and cooperating with one another.

5. Made-to-measure surgical implant guide (1) and associated drill (4) according to any one of claims 1 to 4, **characterised in that** the barrel (11) extends laterally in a direction substantially perpendicular to the longitudinal axis of said guide (1).

6. Made-to-measure surgical implant guide (1) and associated drill (4) according to any one of claims 1 to 5, **characterised in that** at least part of the drive rod (14) of said drill (4) itself serves as a drill and preferably has longitudinal flutes (16) the edges of which can cut.

7. Made-to-measure surgical implant guide (1) and associated drill (4) according to any one of claims 1 to 6, **characterised in that** said drill (4) has at least one toothed wheel (15).

8. Made-to-measure surgical implant guide (1) and associated drill according to any one of claims 1 to 7, **characterised in that** the guide (1) has at least one laterally open bore (9) comprising an insert (10) and **in that** at least part of the inner surface (23) of said insert (10) and part of the outer surface (20) of said barrel (11) cooperate with one another and provide axial securement of said barrel (11) relative to said bore (9).

9. Made-to-measure surgical implant guide (1) and associated drill according to claim 8, **characterised in that** the inner surface (23) of the insert (10) comprises a groove (22) extending in a substantially median plane perpendicular to its axis (YY') and **in that** the outer surface (20) of said barrel (11) comprises a median flute (21) complementary to said groove (22).

10. Made-to-measure surgical implant guide (1) and associated drill (4) according to any one of claims 8 or 9, **characterised in that** the barrel (11) and the insert (10) are generally shaped like a staple the cross-section of which is substantially U-shaped, the arms (18) of the U extending laterally substantially in a plane parallel to the ridge (7), and the axis (YY') perpendicular to said ridge (7) passing through the centre of the rounded part of the U coinciding with the axis of said drill (4).

11. Made-to-measure surgical implant guide (1) and associated drill according to any one of claims 8 to 10, **characterised in that**:
- the insert (10) is preferably 8.00 mm long, 5.00 mm high, has a first hemicylindrical inner surface (23) 4.50 mm in diameter, a first hemicylindrical outer surface (24) 6.00 mm in diameter, first arms (25) 0.75 mm thick, an inner groove (22) with a rectangular section 0.43 mm deep and 1.05 mm wide,
- the barrel (11) is preferably 14.25 mm long, 5.00 mm high, has a second hemicylindrical inner surface (17) 1.54 mm in diameter, a second hemicylindrical outer surface (20) 4.50 mm in diameter, second arms (18) 1.48 mm thick, an outer flute (21) of rectangular section 0.43 mm high and 1.0 mm wide,
- the transverse slot (12) is preferably 0.33 mm wide,
- the control rod (14) is preferably 1.50 mm in diameter and has a height of 13.75 mm between the flange (13) and the end (26) intended to be fixedly attached to the drive device, and a height of the order of 8.75 mm, 14.75 mm or 20.75 mm between said flange (13) and the end supporting the toothed wheel (15),
- the flange or flanges (13) preferably has or have a diameter of 3.50 mm and a thickness of 0.30 mm,
- said toothed wheel (15) preferably has a diameter of 3.05 mm, 6.05 mm, 7.05 mm, 8.05 mm, 9.05 mm, 10.05 mm, 12.05 mm, 15.05 mm or 20.05 mm, and a thickness of 0.30 mm.

12. Process for manufacturing the made-to-measure surgical implant guide (1) and associated drill (4) according to any one of the preceding claims 1 to 11, of the type comprising the following steps:
a) positioning a scanographic guide in the patient's mouth,
b) obtaining the scanner data of said scanographic guide and of the mandible (2) or maxilla of said patient, by means of a computer,
c) computer simulation of said mandible (2) or said maxilla from said data,
d) computer generation of implant planning parameters on the basis of said simulation, under the control of the practitioner,
e) computer control, on the basis of said planning parameters, of a device for forming a template (8) intended to fit the alveolar ridge (7) and having bores (9) with axes (XX', YY', ZZ') and pre-calculated positions,
f) fixing guide inserts (10) in said bores (9),
g) inserting into said inserts (10) drilling barrels (11) arranged so as to control the direction and depth of penetration of a drill (4),
**characterised in that**
- the implant planning is adapted to implants for lateral insertion relative to the alveolar ridge (7),
- the bores (9), the inserts (10) and the barrels (11) are provided with lateral openings relative to said ridge (7),
- the drill (4) is provided with axial securement means (13, 27, 28) cooperating with said barrels (11).

13. Process for producing the made-to-measure surgical implant guide (1) and associated drill (4) according to claim 12, **characterised in that** the inserts (10) and the barrels (11) are respectively made of titanium alloy, preferably TA6V, and steel, preferably 316L stainless steel.

14. Process for producing the made-to-measure surgical implant guide (1) and associated drill (4) according to one of claims 12 or 13, **characterised in that** the template (8) is produced by stereolithography.

15. Process for producing the made-to-measure surgical implant guide (1) and associated drill (4) according to any one of claims 12 to 14, **characterised in that** the inserts (10) are glued into the template (8).

16. Process for producing the made-to-measure surgical implant guide (1) and associated drill (4) according to any one of claims 12 to 15, **characterised in that** the drill (4) is produced by forging a single piece of metal in a specific step.

## Patentansprüche

1. Chirurgische Maß-Implantierführung (1) und zugeordnete Fräse (4) von dem Typ, die rittlings auf dem Alveolarkamm (7) eines Oberkiefer- oder eines Unterkiefer-Bogens (2) plaziert werden und wenigstens eine Bohrbuchse (11) umfassen, die dazu ausgelegt ist, die Fräse (4) axial zu führen, **dadurch gekennzeichnet, dass** die Buchse (11) seitlich geöffnet ist, und dass wenigstens ein Teil der Innenfläche (17) der Buchse (11) sowie wenigstens ein Teil der Außenfläche der Fräse (4) miteinander zusammenwirken und den vollständigen axialen Halt der Fräse (4) bezüglich der Buchse (11) gewährleisten.

2. Chirurgische Maß-Implantierführung (1) und zugeordnete Fräse (4) nach Anspruch 1, **dadurch gekennzeichnet, dass** die Buchse (11) einen Querschlitz (12) umfasst, der sich in einer im Wesentlichen mittigen Ebene orthogonal zu ihrer Achse (YY') erstreckt, und dass die Antriebsstange (14) der Fräse (4) einen Kragen (13) umfasst, wobei der Schlitz (12) und der Kragen (13) miteinander zusammenwirken.

3. Chirurgische Maß-Implantierführung (1) und zugeordnete Fräse (4) nach Anspruch 1, **dadurch gekennzeichnet, dass** die Antriebsstange (14) der Fräse (4) zwei Krägen (13) umfasst, die die Buchse (11) einspannen.

4. Chirurgische Maß-Implantierführung (1) und zugeordnete Fräse (4) nach Anspruch 1, **dadurch gekennzeichnet, dass** die Innenfläche (17) der Buchse (11) einen radial mit Rillen versehenen Teil umfasst, und dass die Antriebsstange (14) der Fräse (4) einen Ringteil (29) umfasst, wobei der Rillenteil (30) und der Ringteil (29) komplementär sind und miteinander zusammenwirken.

5. Chirurgische Maß-Implantierführung (1) und zugeordnete Fräse (4) nach einem der Ansprüche 1 - 4, **dadurch gekennzeichnet, dass** sich die Buchse (11) seitlich in eine Richtung im Wesentlichen orthogonal zur Längsachse der Führung (1) erstreckt.

6. Chirurgische Maß-Implantierführung (1) und zugeordnete Fräse (4) nach einem der Ansprüche 1 - 5, **dadurch gekennzeichnet, dass** wenigstens ein Teil der Antriebsstange (14) der Fräse (4) selbst als Fräse dient und vorzugsweise Längsriffeln (16) aufweist, deren Kanten schneidend ausgelegt sind.

7. Chirurgische Maß-Implantierführung (1) und zugeordnete Fräse (4) nach einem der Ansprüche 1 - 6, **dadurch gekennzeichnet, dass** die Fräse (4) wenigstens ein Zahnrad (15) umfasst.

8. Chirurgische Maß-Implantierführung (1) und zugeordnete Fräse nach einem der Ansprüche 1 - 7, **dadurch gekennzeichnet, dass** die Führung (1) wenigstens eine seitlich offene Bohrung (9) aufweist, die einen Einsatz (10) umfasst, und dass wenigstens ein Teil der Innenfläche (23) des Einsatzes (10) sowie ein Teil der Außenfläche (20) der Buchse (11) miteinander zusammenwirken und den axialen Halt der Buchse (11) bezüglich der Bohrung (9) gewährleisten.

9. Chirurgische Maß-Implantierführung (1) und zugeordnete Fräse nach Anspruch 8, **dadurch gekennzeichnet, dass** die Innenfläche (23) des Einsatzes (10) eine Rille (22) umfaßt, die sich in einer im Wesentlichen mittigen Ebene orthogonal zu seiner Achse erstreckt, und dass die Außenfläche (20) der Buchse (11) eine zu der Rille (22) komplementäre Mittenriffelung (21) umfasst.

10. Chirurgische Maß-Implantierführung (1) und zugeordnete Fräse (4) nach einem der Ansprüche 8 oder 9, **dadurch gekennzeichnet, dass** die Buchse (11) und der Einsatz (10) die allgemeine Form eines Reiters haben, dessen gerader Abschnitt im Wesentliche U-förmig ist, wobei sich die Arme (18) des U seitlich im Wesentlichen in einer Ebene parallel zu dem Kamm (7) erstrecken, und wobei die Achse (YY'), die orthogonal zu dem Kamm (7) durch das Zentrum des abgerundeten Teils des U verläuft, mit der Achse der Fräse (4) zusammenfällt.

11. Chirurgische Maß-Implantierführung (1) und zugeordnete Fräse nach einem der Ansprüche 8 - 10, **dadurch gekennzeichnet, dass**:
- der Einsatz (10) vorzugsweise eine Länge von 8,00 mm aufweist, eine Höhe von 5,00 mm, eine halbzylindrische erste Innenfläche (23) mit einem Durchmesser von 4,50 mm, eine halbzylindrische erste Außenfläche (24) mit einem Durchmesser von 6,00 mm, erste Arme (25) mit einer Dicke von 0,75 mm, eine innere Rille (22) von rechteckigen Querschnitt mit einer Tiefe von 0,43 mm und einer Breite von 1,05 mm,
- die Buchse (11) vorzugsweise eine Länge von 14,25 mm aufweist, eine Höhe von 5,00 mm, eine halbzylindrische zweite Innenfläche (17) mit einem Durchmesser von 1,54 mm, eine halbzylindrische zweite Außenfläche (20) mit einem Durchmesser 4,50 mm, zweite Arme (18) mit einer Dicke von 1,48 mm, eine äußere Riffelung (21) von rechteckigen Querschnitt mit 0,43 mm Höhe und 1,00 mm Breite,
- der Querschlitz (12) vorzugsweise eine Breite von 0,33 mm aufweist,
- die Steuerstange (14) vorzugsweise einen Durchmesser von 1,50 mm aufweist sowie eine Höhe von 13,75 mm zwischen dem Kragen (13) und dem Ende (26), das dazu ausgelegt ist, mit der Antriebsvorrichtung verbunden zu sein, sowie eine Höhe in der Größenordnung von 8,75 mm, 14,75 mm oder 20,75 mm zwischen dem Kragen (13) und dem Ende, das das Zahnrad (15) trägt,
- der oder die Krägen (13) vorzugsweise einen Durchmesser von 3,50 mm und eine Dicke von 0,30 mm aufweisen,
- das Zahnrad (15) vorzugsweise einen Durchmesser von 3,05 mm, 6,05 mm, 7,05 mm, 8,05 mm, 9,05 mm, 10,05 mm, 12,05 mm, 15,05 mm oder 20,05 mm aufweist sowie eine Dicke von 0,30 mm.

12. Verfahren zur Herstellung der chirurgischen Maß-Implantierführung (1) und der zugeordneten Fräse (4) nach einem der vorhergehenden Ansprüche 1 - 11, vom Typ derjenigen, die die folgenden Schritte umfassen:
a) Platzieren einer Grafikscanführung im Mund des Patienten,
b) Computererfassung von Scannerdaten der Grafikscanführung sowie des Unterkiefers (2) oder des Oberkiefers des Patienten,
c) Computersimulation des Unterkiefers (2) oder des Oberkiefers ausgehend von den Daten,
d) Computergenerierung von Implantierplanungsparametern ausgehend von der Simulation unter der Kontrolle des Praktikers,
e) Computersteuerung, ausgehend von den Planungsparametern, einer Vorrichtung zur Bildung einer Schablone (8), die dazu ausgelegt ist, sich an den Alveolarkamm (7) anzupassen und die Bohrungen (9) mit vorberechneten Achsen (XX', YY', ZZ') und Positionen aufweist,
f) Befestigung von Führungseinsätzen (10) in den Bohrungen (9),
g) Einsetzen von Bohrbuchsen (11), die dazu ausgelegt sind, die Richtung und die Tiefe des Eindringens einer Fräse (4) zu kontrollieren, in die Einsätze (10),
**dadurch gekennzeichnet, dass**
- die Implantierplanung ausgelegt ist für Implantate für einen bezüglich des Alveolarkamms (7) seitlichen Einsatz,
- die Bohrungen (9), die Einsätze (10) und die Buchsen (11) mit bezüglich des Kamms (7) seitlichen Öffnungen versehen sind,
- die Fräse (4) mit Mitteln (13, 27, 28) zum axialen Halten ausgestattet ist, die mit den Buchsen (11) zusammenwirken.

13. Verfahren zur Herstellung der chirurgischen Maß-Implantierführung (1) und der zugeordneten Fräse (4) nach Anspruch 12, **dadurch gekennzeichnet, dass** die Einsätze (10) und die Buchsen (11) aus einer Titanlegierung, vorzugsweise TA6V, bzw. aus Stahl, vorzugsweise aus INOX 316L, hergestellt sind.

14. Verfahren zur Herstellung der chirurgischen Maß-Implantierführung (1) und der zugeordneten Fräse (4) nach einem der Ansprüche 12 oder 13, **dadurch gekennzeichnet, dass** die Schablone (8) durch Stereolithographie hergestellt ist.

15. Verfahren zur Herstellung der chirurgischen Maß-Implantierführung (1) und der zugeordneten Fräse (4) nach einem der Ansprüche 12 - 14, **dadurch gekennzeichnet, dass** die Einsätze (10) in die Schablone (8) geklebt sind.

16. Verfahren zur Herstellung der chirurgischen Maß-Implantierführung (1) und der zugeordneten Fräse (4) nach einem der Ansprüche 12 - 15, **dadurch gekennzeichnet, dass** die Fräse (4) im Verlauf eines speziellen Arbeitsschritts durch Schmieden aus einem einzigen Metallteil hergestellt wird.
